# EUROPEAN PATENT APPLICATION

(11) **EP 1 335 308 A1**
(43) Date of publication of application: **13.08.2003**
(21) Application number: 03290236.3
(22) Date of filing: 30.01.2003
(51) Int. Cl.: G06F 17/30, G06F 17/60

(54) **Electronic assembly procedure manual system**

(30) Priority: 30.01.2002 JP 2002021637
(71) Applicant: Mitsubishi Heavy Industries, Ltd., Tokyo 100-8315 (JP)
(72) Inventor: Sakagami, Hiromi, Mitsubishi Heavy Ind., Ltd., Hyogo-ken (JP); Suehiro, Shozo, Mitsubishi Heavy Ind., Ltd., Hyogo-ken (JP); Ojiro, Yasuhiro Mitsubishi Heavy Ind., Ltd., Hyogo-ken (JP)
(74) Representative: Intès, Didier Gérard André

(57) **Abstract**

A method for generating an electronic assembly procedure manual and an electronic assembly procedure manual system have a recording means for recording drawing data regarding a two-dimensional drawing (610) showing an object in a partially or totally assembled condition and animation data regarding an animation showing the process of assembling an object partially or totally, a screen image (500) that displays a prescribed two-dimensional drawing (610) based on drawing data, and displays an animation icon (810) identifying an animation corresponding to the two-dimensional drawing (610) at a prescribed position on the two dimensional drawing (610), and a playback means for playing back an animation based on animation data when an operation such as clicking is done with respect to a displayed animation icon.

## Description

### BACKGROUND OF THE INVENTION

### 1. Field of the Invention

The present invention relates to an electronic assembly procedure manual system used at the time of manufacturing a product by assembling components, generation support system for assembly procedure manuals, and a method for generating an assembly procedure manual.

### 2. Related Art

At a site used in product assembly, in order to assemble components into a product, the assembly work has in the past been performed based on a written assembly procedure manual, (hereinafter referred to as a "paper-based assembly procedure manual"). A paper-based assembly procedure manual of the past took the form of three two-dimensional drawings generated based on the design drawings for a product.

The two-dimensional drawings of the paper-based assembly procedure manual used, where necessary, coloring and the like to indicate what component of the components to be assembled should be noticed. The two-dimensional drawings of a paper-based assembly procedure manual included information required in performing assembly of components in the form of notes. Thus, in a paper-based assembly procedure manual the description of the component assembly procedure is created as text.

In creating a paper-based assembly procedure manual, it is necessary to generate three two-dimensional views based on design drawings of the product to be manufactured, and to make the necessary notes and the like on these two-dimensional drawings. It is additionally necessary to print the thus generated assembly procedure manual on paper. For this reason, the generation of a paper-based assembly procedure manual requires a great deal of time and labor.

Because the drawings in a paper-based assembly procedure manual are two-dimensional drawings, there is the problem of not being able to grasp the shape of components to be assembled in a three-dimensional manner. In an assembly procedure manual with two-dimensional drawings, when performing the actual assembly of a given component, it is difficult to understand how and in what orientation the component is to be assembled into the product. Thus, because a paper-based assembly procedure manual uses two-dimensional drawings, it is difficult to understand the role of each of the components when they are assembled.

Additionally, in a case for example in which the path of component insertion is complex in a three-dimensional sense or in which the description must be made step-by-step, the assembly procedure manual becomes complex. For example, when attempting to insert a given part, it could be that a bolt needs to be left partially tightened and loose and then the bolt is tightened after the component is inserted. Such tasks are difficult to describe with just two-dimensional drawings and notes as presented in a paper-based assembly procedure manual. Thus, if a paper-based assembly procedure manual is used to present three-dimensionally complex component assembly procedures, it becomes visually difficult to understand. For this reason, the assembly operator must read the notes provided in the paper-based assembly procedure manual and then perform the component assembly procedure while keeping in mind the assembly procedure.

Additionally, in the case of a product having a large number of assembly locations (or components to assemble), there are a large number of assembly procedure manual. In such cases, it is necessary during the assembly procedure to search for the required part from among the large number of assembly procedure manual.

### SUMMARY OF THE INVENTION

Accordingly, it is an object of the present invention to provide an assembly procedure manual enabling an easy understanding of the assembly parts, which would be difficult to understand with static two-dimensional drawings.

Another object of the present invention is to provide an assembly procedure manual generation support system for generating an assembly procedure manual that is visually intuitive and easy to understand.

In order to achieve the above-noted objects, the present invention provides an electronic assembly procedure manual generation support system having a storage means for storing drawing data with regard to a drawing of part of an object or an entire assembled object and animation data with regard to an animation showing a process of assembly of the object up until a part thereof or assembly of the entirety thereof as shown in a drawing, a display means for displaying in a prescribed position on a drawing an object identified by an animation corresponding to the drawing, and a playback means for playing back an animation when a prescribed operation is performed with respect to a displayed object based on animation data.

An electronic assembly procedure manual according to the present invention can include a display means that displays a drawing showing the partial or fully assembled condition of an object, and can display by this display means an animation played back by the playback means. When this is done, it is possible to display, in place of the above-noted drawing that is displayed, a played back animation.

The display means displays an object of the objects displays as a drawing at a main position for assembly. The displayed object can be, for example, displayed in the form of an icon. In the case in which, for example, a given component is to be inserted at a given position, because the component is the main location for the assembly, it is possible to display an icon over component that is to be inserted. In the case, for example, in which a component is to be screwed in with a bolt, because a plurality of components are the focus of the assembly operation, an icon can be displayed in the area surrounding the plurality of components.

Additionally, in this electronic assembly procedure manual, it is possible, in addition to drawings and animations, to display text that describes an assembly procedure.

The present invention also provides an assembly procedure manual generation support system for generating an assembly procedure manual for indicating an object assembly procedure manual, this system having an image data generator, which generates drawing data in which is recorded an image of an object 1 in the assembled condition and an animation in which is recorded a process up until the object is assembled, a drawing pasting section, which pastes into an assembly procedure manual file describing by text an assembly procedure for a prescribed assembly process an image that is displayed based on drawing data corresponding to the text, and an animation pasting section, which pastes an animation corresponding to this image into an assembly procedure manual file at a prescribed position. In this assembly procedure manual generation support system, an assembly procedure manual is generated as an electronic assembly procedure manual file. The assembly procedure manual file is made up of a plurality of assembly procedure manual pages describing prescribed assembly procedures. By using this arrangement, it is possible to paste images and icons corresponding to the assembly procedures in each assembly process into each of the assembly procedure manual pages.

Additionally, the present invention provides a method for generating an assembly procedure manual, this method having a step of generating image data with regard to an object in an assembled condition and animation data with regard to movement in the assembly process for the components making up the object, a step of describing an assembly procedure in a prescribed assembly process as text in an assembly procedure manual file, a step of pasting an image displayed based on image data corresponding to an assembly process into the assembly procedure manual file, and a step of pasting into an assembly procedure manual file at a prescribed position an icon indicating an animation corresponding to an image.

### BRIEF DESCRIPTION OF THE DRAWINGS

Fig. 1 is a block diagram showing an assembly procedure manual generation support system according to an embodiment of the present invention.
Fig. 2 is a flowchart showing a procedure for generating an assembly procedure manual in the assembly procedure manual generation supporting system according to an embodiment of the present invention.
Fig. 3 is a drawing showing a screen image of an assembly procedure manual generated by an assembly procedure manual generation support system according to this embodiment of the present invention.
Fig. 4 is a drawing showing an example of the movement of an animation in this embodiment of the present invention.

### DETAILED DESCRIPTION OF THE PREFERRED EMBODIMENT

An embodiment of the present invention is described in detail below, with references made to relevant accompanying drawings.

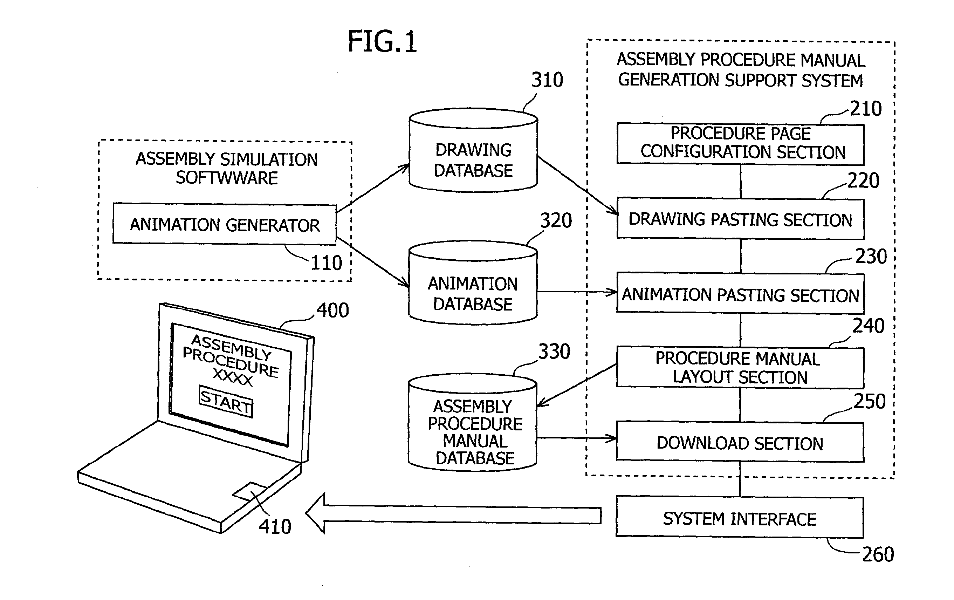

Fig. 1 is a drawing showing an assembly procedure manual generation support system according to an embodiment of the present invention. The assembly procedure manual generation support system shown in Fig. 1 uses an animation generator 110 as part of a function built into assembly simulation software. The assembly simulation software and animation generator 110 function are described below in further detail.

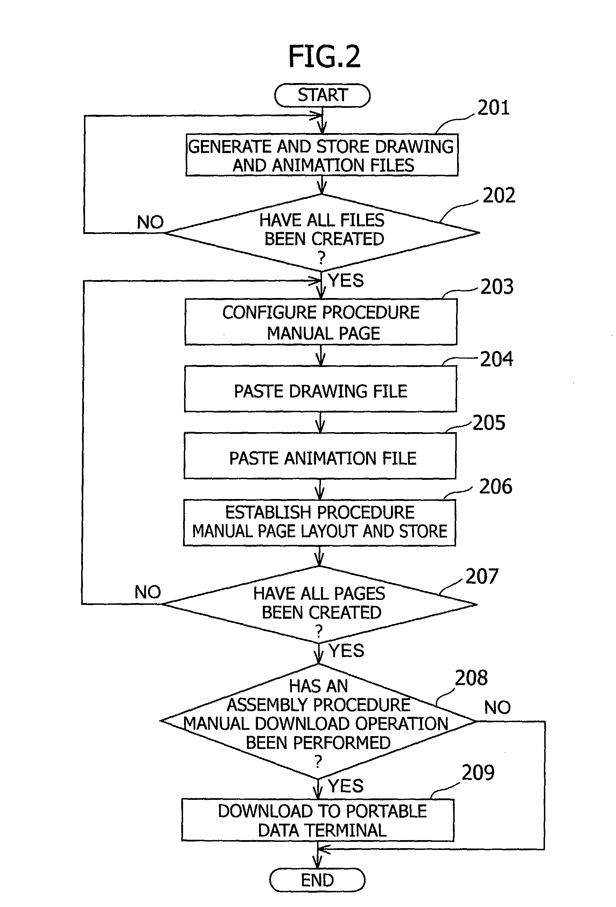

The assembly procedure manual generation support system itself includes a procedure manual page configuration section 210 which describes operations and functions described in the flowchart of Fig. 2, a drawing pasting section 220, and a download section 250. This system also includes a drawing database 310 and animation database 320 for recording and storing drawing files and animation files created by the animation generator 110, and an assembly procedure manual database 330 for recording and storing an assembly procedure manual file created by the main assembly procedure manual generation support system. Additionally, the system includes a system interface 260, which reads out an assembly procedure manual file stored in the assembly procedure manual database 330 and outputs the read-out assembly procedure manual file to a portable data terminal or the like. The system interface 260, by connection with a portable data terminal interface 410 provided in a portable data terminal 400, can perform a download of an assembly procedure manual file. Assembly simulation software used as the animation generator 110 serving as part of the functions of the assembly procedure manual generation support system is described below.

DELMIA (by Nihon Delmia KK) or the like can be used as assembly simulation software. Using this assembly simulation software, it is possible to capture from CAD data and the like component data that is generated at the design stage of a product. Based on this CAD data, it is possible to investigate the assembly procedure (method of assembly) by moving components while checking for component interference. When this is done, because a component that is display on the screen based on CAD data can be displayed not only two-dimensionally but also three-dimensionally, it is possible to make detailed interference checks by performing such operations as rotation, and to investigate the assembly procedure.

That is, using a two-dimensional or three-dimensional animation, it is possible to view the specific movement of each component in an assembly procedure, something which is not possible with a static two-dimensional drawing. It is additionally possible to record as animations (image data) the movement of components when investigating an assembly procedure. Because an animation file resulting from an assembly simulation can be stored in an AVI (Audio Video Interleave) formatted file, it is possible to replay the animation later. Using this assembly simulation software, it is possible to create a two-dimensional drawing not only from an animation file, but also from CAD data, and it is possible to record the thus created drawing as a drawing file (image data).

An assembly procedure manual generation support system according to the present invention can be a system implemented as an animation database generator 110, the assembly procedure manual generation support system proper, and various databases resident within a computer apparatus, and it is alternatively possible to impart the function of an animation database generator 110, the assembly procedure manual generation support system proper, and various databases to a plurality of computer connected to a network.

It is possible, via the download section 250 and the system interface 260, to use a PDA or laptop personal computer as the portable data terminal 400 for downloading assembly procedure data generated by the assembly procedure manual generation support system.

Fig. 2 is a flowchart that shows the procedure for assembly procedure manual generation in an assembly procedure manual generation support system according to the present invention, and is used below to describe the processing in the assembly procedure manual generation support system of the present invention.

First, in the animation generator 110, a drawing file and an animation file are generated based on CAD data (step 201). The drawing file created at step 201 is recorded and stored in the drawing database 310, and the animation file is recorded and stored in the animation database 320. A judgment is then made as to whether or not all the drawing files and animation files required to generate an assembly procedure manual for a particular product have been created (step 202). At step 202, if the judgment is made that all the required files have not yet been created, the processing of step 201 and step 202 is repeated so as to create drawing and animation files. At step 202, if the judgment is made that all files have been created, the function of the assembly procedure manual generation support system proper is launched.

At the procedure manual page configuration section 210 of the assembly procedure manual generation support system proper, a page of the assembly procedure manual is newly created (step 203). A page of an assembly procedure manual is assigned to each individual assembly procedure (one step) performed when assembling a product. The specific details of the part that is to be assembled in the assembly step are input at the procedure manual page configuration section 210, and these are coded as notes with respect to created page.

When the assembly procedure manual page is created at step 203, a drawing pasting section 220 reads a drawing file for the part described on the page from the drawing database 310. The read drawing file is pasted at an arbitrary position of the page created at step 203 (step 204). When this is done, the page of the assembly procedure manual displays as an image the pasted in drawing file.

An animation pasting section 230 reads an animation file for the part described on the page onto which the drawing file was pasted from the animation database 320. The read animation file is pasted at an arbitrary position of the page of the assembly procedure manual (step 205). When this is done, the pasted animation file is pasted onto the page in the form of an icon.

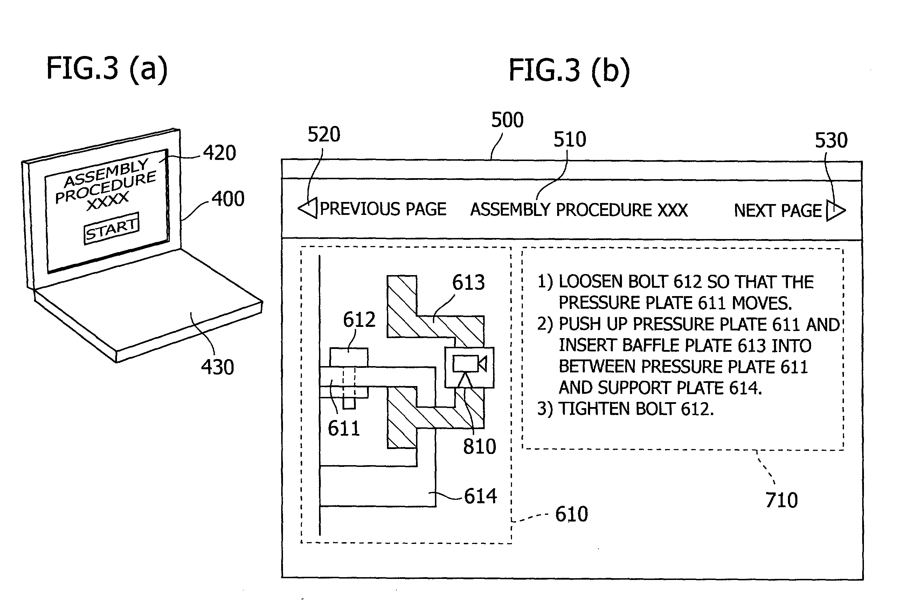

Fig. 3 is used later to describe the screen image of an assembly procedure manual page onto which the drawing and animation files are pasted at step 204 and step 205.

At the assembly procedure manual layout section 240, the pasting positions of step 203 to step 205, the position of the icon for replaying of the animation, and the location and fine adjustment of the note information are performed so as to establish the layout of the assembly procedure manual (step 206). A page of the assembly procedure manual indicating one step as established at step 206 is recorded and stored in the assembly procedure manual database 330 as an assembly procedure manual file.

When the layout of a page of the assembly procedure manual for one assembly step is established at step 206, a judgment is made as to whether or not all the pages of the assembly procedure manual have been created (step 207). If at step 207 the judgment is made that all the pages have not been completely created, the processing of step 203 to step 207 is repeated so as to create all the pages of the assembly procedure manual.

If, however, the judgment is made at step 207 that all pages have been created, a judgment is made as to whether or not an operation has been performed in order to download the created assembly procedure manual to the portable data terminal 400 (step 208). At step 208 if the judgment is made that an operation to download has not been made, processing ends.

If at step 208 the judgment is made that an operation is made to download, the download section 250 reads the prescribed assembly procedure manual file from the assembly procedure manual database 330. The read assembly procedure manual file is downloaded to the portable data terminal 400, via the download section 250, the system interface 260, and the portable data terminal interface 410 (step 209).

If the above-described processing is performed the assembly procedure manual generation support system, the assembly procedure manual file into which is pasted an animation is created and recorded and stored in the assembly procedure manual database 330, and this assembly procedure manual file can be downloaded to a recording section of the portable data terminal 400. By doing this, it is possible to access an assembly procedure manual file created by the assembly procedure manual generation support system from the assembly site.

A page of an assembly procedure manual created in this embodiment has pasted into it, in addition to the two-dimensional drawing and notes as in the past, the icon of an animation file.

In the animation generator 110 described above, it is possible to create not only a two-dimensional animation, but also a three-dimensional animation. That is, by playing back a two-dimensional or three-dimensional animation at the portable data terminal 400, it is possible to view the movement of a part from an easy-to-understand angle, something which is difficult by merely viewing a static two-dimensional drawing, thereby facilitating the achievement of a visual understanding of the component assembly procedure.

Although in the flowchart shown in Fig. 2, the explanation is for the case in which the processing from the generation of the animation file through the downloading to the portable data terminal 400 is performed together, it is alternatively possible to separate these individual functions to enable independent launching thereof, so that tasks are performed in a divided manner. If this is done, it is possible to easily perform corrections and addition to the pages of the generated assembly procedure manual.

The assembly procedure manual download performed at step 209 can be performed as a download of all the assembly procedure manual files at one time, or can be performed as a divided download as necessary.

Fig. 3 is a drawing showing an image of the screen image of an assembly procedure manual created by an assembly procedure manual generation support system according to this embodiment. As shown in Fig. 3 (a), the portable data terminal 400 in this embodiment includes a display screen 420, and an operating section 430. When performing an assembly task, it is possible by operating the operation section 430 to read out an assembly procedure manual file recorded in the recording section so as to display an assembly procedure manual page showing an arbitrary assembly step on the display screen 420.

When an operation is performed at the portable data terminal 400 so as to cause display of an assembly procedure manual, a screen image 500 such as shown in Fig. 3 (b) is displayed on the display screen 420. The screen image 500 displays the title 510 of the current assembly step one page at a time for each assembly step. A previous page button and a next page button are provided at the two ends of the title 510, making it possible to display other pages by performing a click operation or the like with respect to these buttons.

The screen image 500 includes a two-dimensional drawing 610, note information 710, and an animation icon 810. The screen image shown in Fig. 3 (b) is a page of the assembly procedure manual showing an assembly step of tightening a bolt 612 so as to push up a pressure plate 611 and, after assembling a baffle plate 613 between the pressure plate 611 and the support plate 614, tightening the bolt 612. The baffle plate 613 that is the component of interest in this assembly step is displayed colored.

By merely viewing the two-dimensional drawing 610 and the note information 710, it is difficult to grasp what part should be moved in what manner in order to assemble the baffle plate 613 at the part indicated in the two-dimensional drawing 610. If clicking or the like is done to the animation icon 810, a playback is performed of the animation file pasted onto this page, making it possible to view the movement of each part at the time of performing assembly, in the form of an animation.

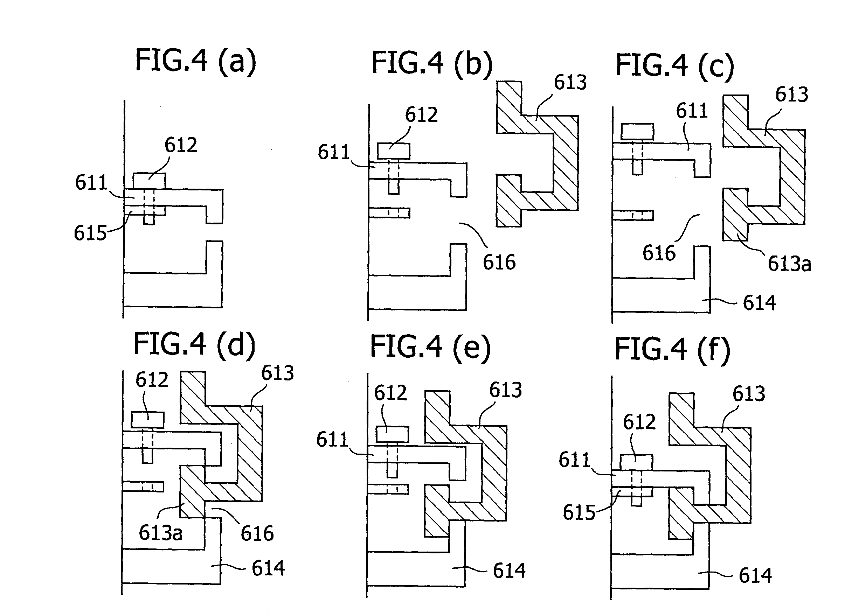

Fig. 4 is a drawing showing an example of the movement of the animation in this embodiment. Fig. 4 (a) shows the condition of the animation at the start of the playback of the animation. As shown in the drawing, at the start of the playback the bolt 612 is tightened, and the pressure plate 611 and pressure plate holding bar 615 are screwed together. When the bolt 612 is loosened and removed from the pressure plate holding bar 615, as the pressure plate 611 is gradually pushed upward, the animation is displayed in the condition shown in Fig. 4 (b). When the pressure plate 611 is pushed further upward, the animation is displayed in the condition shown in Fig. 4 (c). By the pressure plate 611 being raised, an opening 616 is formed between the pressure plate 611 and the support plate 514 that is larger than the flange 613a of the baffle plate 613.

The flange 613a is then inserted into the opening 616. When the pressure plate 611 is gradually pushed downward, the animation displayed in the condition shown in Fig. 4 (d). As shown in the drawing, when the entire flange 613a passes through the opening 616, it is inserted into a space that is surrounded by the pressure plate 611 and the support plate 614. When the entire flange 613a passes through the opening 616, the baffle plate 613 pushes downward to make intimate contact with the support plate 614, and the pressure plate 611 is gradually pushed downward. When this occurs, the animation is displayed in the condition shown in Fig. 4 (e). From the condition shown in Fig. 4 (d) when the pressure plate 611 is pushed further downward and the bolt 612 is inserted into the pressure plate holding bar 615 and tightened, the animation is displayed in the condition shown in Fig. 4 (f). As shown in the drawing, the flange 613a of the baffle plate 613a is assembled into the internal part of the pressure plate 611 and the support plate 614, and the pressure plate 611 and the pressure plate holding bar 615 are screwed together by the bolt 612. After playback of one assembly step to the end thereof, the playback of the animation ends, and return is made to the screen image shown in Fig. 3.

This animation is displayed in a region in which the two-dimensional drawing 610 of the screen image 500 is displayed, or over the entire display screen 420. It is further possible to display a pop-up window or the like.

As described above, the animation is displayed to describe the movement, following the sequence indicated by Fig. 4 (a) to Fig. 4 (f). By doing this, it is possible to easily visually understand an assembly step procedure by viewing the movement of each component, something that is difficult to do with just the static two-dimensional drawing 610 and the note information 710.

Although Fig. 4 shows an example of the case in which a two-dimensional animation is played back, if the animation generator 110 generates a three-dimensional animation, it is also possible to play back a three-dimensional animation.

According to this embodiment of the present invention as described above, it is possible by playing back an animation not only to display the two-dimensional drawing 610 and note information 710, but also to play back an animation, thereby enabling generation of an assembly procedure manual enabling a more visually understandable display.

Because the assembly procedure manual in this embodiment is in electronic form, it is not necessary to flip to the required page by hand, making it easy to find and display a page of the assembly procedure manual that shows the required assembly step, based on a table of contents.

Additionally, if a change occurs in the assembly procedure manual, by changing the contents of the database it is possible by merely thereafter downloading the new assembly procedure manual to always distribute the assembly procedure manual to the assembly site in the new condition.

Additionally, because it is possible to store the assembly procedure manual for a product in a database, not only is less storage space required than in the case of using a paper-based assembly procedure manual, but also it is easy to perform a backup of a generated assembly procedure manual.

Although the foregoing embodiment is described with regard to the case in which an assembly procedure manual generated by the assembly procedure manual generation support system is downloaded to the portable data terminal 400, it will be understood that the present invention is not restricted to the above-described embodiment. For example, if the computer apparatus including the assembly procedure manual generation support system and the portable data terminal 400 have a communication function, it is alternatively possible to download, record, and store only the table of contents part of the assembly procedure manual at the portable data terminal 400 side, and to consecutively transmit and receive pages of the assembly procedure manual selected or indicated at the portable data terminal 400.

As described above, the present invention can provide an assembly procedure manual enabling viewing of a part of an assembly procedure manual that would be difficult to understand with just a two-dimensional drawing and note information, by using playback of an animation at the assembly site.

The present invention can provide an assembly procedure manual generation support system for generating an assembly procedure manual into which is pasted an animation.

## Claims

1. An electronic assembly procedure manual system displaying an assembly procedure of an object, comprising:
means for recording drawing data regarding a drawing (610) showing the object in a partially or fully assembled condition, and recording animation data regarding an animation showing a process of assembling the object partially or fully;
means for displaying a prescribed drawing (610) based on the drawing data, and for displaying at a prescribed position on the drawing an object (810) identifying the animation corresponding to the drawing; and
means for playing back the animation based on the animation data when a prescribed operation is performed with respect to the displayed object.

2. An electronic assembly procedure manual system according to claim 1, wherein, in place of the drawing (610), the played back animation is displayed.

3. An electronic assembly procedure manual system according to claim 1, wherein the display means displays the object at a location that is the focus of an assembly operation.

4. An assembly procedure manual generation support system for giving instruction for assembly of an object, comprising:
an image data generator (110) generating image data that records an image of the object in the assembled condition and animation data that records a process up until the assembly of the object;
a drawing pasting section (220) that pastes into an assembly procedure manual file that described in text (710) an assembly procedure of a prescribed assembly step an image (610) that is displayed based on the drawing data; and
an animation pasting section (230) that pastes an icon (810) identifying the animation corresponding to the image at a prescribed location in the assembly procedure manual file.

5. A method for generating an assembly procedure manual, comprising:
a step (201) of generating drawing data regarding an object in an assembled condition and animation data regarding movement of a constituent component of the object in an assembly step;
a step of describing an assembly procedure in a prescribed assembly step as text (710) in an assembly procedure manual file;
a step (204) of pasting an image (610) to be displayed into the assembly procedure manual file based on the drawing data corresponding to the assembly step; and
a step (205) of pasting an icon (810) indicating the animation corresponding to the image at a prescribed position in the assembly procedure manual file.
